# EUROPEAN PATENT SPECIFICATION

(11) **EP 1 769 024 B1**
(45) Date of publication and mention of the grant of the patent: **10.08.2016**
(21) Application number: 04777290.0
(22) Date of filing: 29.06.2004
(51) Int. Cl.: C08K 5/18, C08L 21/00

(54) **RUBBER COMPOSITION AND TIRE COMPRISING SAME**
KAUTSCHUKZUSAMMENSETZUNG UND REIFEN DAMIT
COMPOSITION DE CAOUTCHOUC ET PNEUMATIQUE COMPRENANT CELLE-CI

(43) Date of publication of application: 04.04.2007
(73) Proprietor: Compagnie Générale des Etablissements Michelin, 63000 Clermont-Ferrand (FR); Michelin Recherche et Technique S.A., 1763 Granges-Paccot (CH)
(72) Inventor: HETZEL, Peter, Greer, SC 29651 (US); DOUARRE, Jean-Michel, F-63170, Aubiere (FR)
(74) Representative: Neugebauer, Jürgen
(86) International application number: PCT/US2004/020961
(87) International publication number: WO 2006/011877

(56) References cited:
- WO-A-2005/108480
- US-A- 3 391 107
- US-A- 3 592 793
- US-A- 3 634 318
- US-A- 3 968 080
- US-A- 4 764 547
- US-A- 4 767 809
- US-A1- 2002 165 302

## Description

### Field of the Invention

The present invention is in the field of elastomeric compositions, more particularly in the field of fast-curing rubber compositions for use in rubber articles, such as tires, belts, hoses, and tracks.

### Background of the Invention

The market for retreaded pneumatic tires is almost entirely in the arena of trucking, aircraft, and earthmoving vehicles. In the trucking market, the carcass of a tire is expected to last several hundred thousand miles, and be amenable to having a new tread adhered to it several times. New truck tires are quite expensive, and are therefore bought with the expectation that their high initial costs are offset by the long service life of the carcass, and the low comparative cost of retreading.

A variety of procedures and different types of equipment are available for use in recapping or retreading pneumatic tires. One of the first steps in retreading a worn tire is to remove remaining tread material from the tire carcass, for example, by a sanding procedure known as buffing. Next a layer of green (uncured) rubber, known as "cushion gum," is applied to the carcass. This layer of extruded uncured rubber may be stitched or adhesively bonded to the carcass. Next, a tread layer is applied atop the layer of cushion gum. In the cold recapping process, the tread is cured rubber, and has a tread pattern already impressed in its outer surface. The tire is then placed in an autoclave, and heated under pressure for an appropriate time to induce curing of the gum layer, and bonding of the gum layer to the tread and the carcass. In the hot recapping process, the tread is uncured rubber, and has no tread pattern. The tire is then placed in a tire mold and heated under pressure for an appropriate time to cure the gum layer and the tread, and to cause the gum layer to bind with the tread and the carcass. [The term "cure" refers to the formation of cross-links between the elastomer molecules in the rubber compound, otherwise known as vulcanization].

However, in recapping procedures it is often necessary to employ rubber compounds with short vulcanization times. Low curing temperatures necessitate the use of ultra-accelerators in the rubber compound, which creates challenges for the employment of the compound. The accelerators at ambient temperature may begin to react with other components of the compound. They must therefore be stored under refrigeration to prevent premature curing of the compound or evolution of the cure rate. More importantly, the cure rate may increase upon green aging of the compound, leading to the need for a process modification or possibly hindering performance of the product.

Various methods have been proposed to prevent premature curing of the cushion rubber compound. These include Japanese Patent No. 48052678 (1973); Japanese Patent No. 48052679 (1973); German Patent Application No. DE19754341 (1999); International Patent No. WO99/27012 (1999); European Patent Application No. EP1034216 (2000); Japanese Patent No. 59022942 (1984); Japanese Patent No. 52069455 (1977). None of these methods has proven entirely satisfactory.

Therefore, it would be beneficial to have a rubber composition which did not require refrigeration, and which limited its cure rate change through its useful life, or, better still, which showed no cure rate change through its useful life.

### Summary of the Invention

The present invention is a rubber composition as defined in claims 1, 4 or 8. In one embodiment, the rubber composition comprises the following compound:

R1-NH-phenyl-NH-R2

where the amino moieties occupy the 1 and 4 positions of the phenyl ring, and R1 and R2 are selected from the group consisting of
H, C1 to C3 straight chain or branched alkyl groups,
and wherein R1 and R2 may be the same or different.

In the composition of the invention, the t₉₀, isothermal at 125°C is within thirty percent of the t₉₀, after 28 days aging at forty degrees Celsius (40°C), as the unaged green rubber composition.

In another embodiment of the invention, R1 and R2 are selected from C4 to C5 straight chain or branched alkyl groups. In another embodiment of the invention, R1 and R2 are selected from C6 to C15 straight chain or branched alkyl groups. In another embodiment of the invention, the rubber compound is greater than 5 parts by weight per hundred parts of the rubber composition.

In a further embodiment of the invention, the rubber composition set forth above has a scorch, measured at 105°C, within eight percent of the scorch, after 28 days aging at forty degrees Celsius (40°C), as the unaged green rubber composition.

In a further embodiment of the invention, the rubber composition includes a dithiocarbamate accelerator. In a further embodiment of the invention, the rubber composition comprises natural or synthetic rubbers.

The present invention also includes a tire comprising the composition. The present invention also includes a method or retreading a tire by use of the composition as a connecting rubber, and repairing a defect in a tire by use of the composition.

### Brief Description of the Figures

Figure 1 is a rheometer curve showing an unaged connecting rubber versus a connecting rubber aged for 8 weeks at 40 degrees Celsius.
Figure 2 is a rheometer curve showing unaged and aged rubber compositions, one according to the invention, and one not according to the invention.

### Detailed Description of the Invention

The present invention is a rubber composition comprising the following compound:

R1-NH-phenyl-NH-R2

where the amino moieties occupy the 1 and 4 positions of the phenyl ring, and R1 and R2 are selected from the group consisting of:
H, C1 to C3 straight chain or branched alkyl groups,
and wherein R1 and R2 may be the same or different;
and where the t₉₀, isothermal at 125°C is within thirty percent of the t₉₀, after 28 days aging at forty degrees Celsius (40°C), as the unaged green rubber composition.

In another embodiment of the invention, R1 and R2 are selected from C4 to C5 straight chain or branched alkyl groups. In another embodiment of the invention, R1 and R2 are selected from C6 to C15 straight chain or branched alkyl groups. In another embodiment of the invention, the rubber compound is greater than 5 parts by weight per hundred parts of the rubber composition.

In a further embodiment of the invention, the rubber composition set forth above has a scorch, measured at 105°C, within eight percent of the scorch, after 28 days aging at forty degrees Celsius (40°C), as the unaged green rubber composition.

In a further embodiment of the invention, the rubber composition includes a blend of dithiocarbamate, guanidine, thiazole, thiuram, and sulfenamide accelerators. In a further embodiment of the invention, the rubber composition comprises natural or synthetic rubbers.

The present invention also includes a tire comprising the composition. The present invention also includes a method or retreading a tire by use of the composition as a connecting rubber, and repairing a defect in a tire by use of the composition.

The present invention permits storage of the rubber composition, particularly useful for retreading of tires, at ambient temperatures, obviating the need for refrigeration. Furthermore, said rubber mix can maintain the same cure rate through storage at ambient temperature, simplifying retreading operations.

The composition in accordance with the invention may further include the customary fillers and additives such as, for instance, carbon black, silica, silicic acid, zinc oxide, stearic acid, cobalt salts, resins, protective agents such as antioxidants, extender oils, tackifying agents, and various processing agents.

### t₉₀ and scorch

ASTM D2084 and ISO 3417 describe how to measure cure times (time to for the onset of cure, and time t₉₀ for 90% completion of cure) for rubber compounds using an oscillating rheometer. These standards are incorporated by reference.

In another embodiment of the invention, the t₉₀ would be within twenty percent of the unaged green rubber composition.

Note that "within 5%" for instance, means that the difference between the new value and the original value is less than five percent of the original value.

### Scorch

Scorch is the time at a given temperature required for the onset of crosslink formation, as indicated by an abrupt increase in viscosity. The Mooney viscosity test described in ASTM Standard D 1646, incorporated herein by reference, is used to measure scorch.

### The Aging test

The curing curve is measured before aging according to specific conditions. The aging test is performed by placing an uncured sample of the rubber in a laboratory oven typically 40 degrees Celsius. The uncured compound is aged in these conditions for several days, zero to four weeks, then the curing curve is measured at the same condition as with the unaged sample, to determine the "green stability" of the compound.
1. The uncured mix was milled to a thickness comparable to the actual production thickness. The samples described herein were milled to a thickness of 5 - 9 mm on a laboratory mill.
2. Samples milled to the specified thickness were placed in a laboratory oven (held at a temperature of 40 degrees Celsius) for a period 0-4 weeks.
3. Samples were removed from the oven at weekly intervals for rheometer testing. The evolution the cure system was measured by comparing the t₉₀ (unaged) to the t₉₀ data obtained at 28 day intervals.

### Rubber

"Diene" elastomer or rubber is understood to mean, in known manner, an elastomer resulting at least in part (i.e., a homopolymer or a copolymer) from diene monomers (monomers bearing two double carbon-carbon bonds, whether conjugated or not).

In general, "essentially unsaturated" diene elastomer is understood here to mean a diene elastomer resulting at least in part from conjugated diene monomers, having a content of members or units of diene origin (conjugated dienes) which is greater than 15% (mol %).

Thus, for example, diene elastomers such as butyl rubbers or copolymers of dienes and of alpha-olefins of the EPDM type do not fall within the preceding definition, and may in particular be described as "essentially saturated" diene elastomers (low or very low content of units of diene origin which is always less than 15%).

Within the category of "essentially unsaturated" diene elastomers, "highly unsaturated" diene elastomer is understood to mean in particular a diene elastomer having a content of units of diene origin (conjugated dienes) which is greater than 50%.

These definitions being given, the following are understood more particularly to be meant by diene elastomer capable of being used in the compositions according to the invention:
(a) - any homopolymer obtained by polymerization of a conjugated diene monomer having 4 to 12 carbon atoms;
(b) - any copolymer obtained by copolymerization of one or more dienes conjugated together or with one or more vinyl aromatic compounds having 8 to 20 carbon atoms;
(c) - a ternary copolymer obtained by copolymerization of ethylene, of an α-olefin having 3 to 6 carbon atoms with a non-conjugated diene monomer having 6 to 12 carbon atoms, such as, for example, the elastomers obtained from ethylene, from propylene with a non-conjugated diene monomer of the aforementioned type, such as in particular 1,4-hexadiene, ethylidene norbornene or dicyclopentadiene;
(d) - a copolymer of isobutene and isoprene (butyl rubber), and also the halogenated, in particular chlorinated or brominated, versions of this type of copolymer.

Suitable conjugated dienes include 1,3-butadiene, 2-methyl-1,3-butadiene, 2,3-di(C₁-C₅ alkyl)-1,3-butadienes such as, for instance, 2,3-dimethyl-1,3-butadiene, 2,3-diethyl-1,3-butadiene, 2-methyl-3-ethyl-1,3-butadiene, 2-methyl-3-isopropyl-1,3-butadiene, an aryl-1,3-butadiene, 1,3-pentadiene and 2,4-hexadiene. Suitable vinyl aromatic compounds are, for example, styrene, ortho-, meta- and para-methylstyrene, the commercial mixture "vinyltoluene", para-tert.-butylstyrene, methoxystyrenes, chlorostyrenes, vinylmesitylene, divinylbenzene and vinylnaphthalene.

The copolymers may contain between 99% and 20% by weight of diene units and between 1% and 80% by weight of vinyl aromatic units. The elastomers may have any microstructure, which is a function of the polymerization conditions used, in particular of the presence or absence of a modifying and/or randomizing agent and the quantities of modifying and/or randomizing agent used. The elastomers may for example be block, statistical, sequential or microsequential elastomers, and may be prepared in dispersion or in solution; they may be coupled and/or starred or alternatively functionalised with a coupling and/or starring or functionalising agent.

Polybutadienes are suitable, for example those having a content of 1,2-units of between 4% and 80%, or those having a cis-1,4-content of more than 80%, polyisoprenes, butadiene-styrene copolymers, and those having a styrene content of between 5% and 50% by weight, butadiene-isoprene copolymers, including those having an isoprene content of between 5% and 90% by weight, isoprene-styrene copolymers and those having a styrene content of between 5% and 50% by weight.

In summary the diene elastomer of the composition according to the invention may be selected from the group of highly unsaturated diene elastomers which consists of polybutadienes (BR), polyisoprenes (IR), natural rubber (NR), butadiene copolymers, isoprene copolymers and mixtures of these elastomers.

Such copolymers may also be selected from the group which consists of butadiene-styrene copolymers (SBR), butadiene-isoprene copolymers (BIR), isoprene-styrene copolymers (SIR) and isoprene-butadiene-styrene copolymers (SBIR).

The compositions of the invention may contain a single diene elastomer or a mixture of several diene elastomers, the diene elastomer or elastomers possibly being used in association with any type of synthetic elastomer other than a diene elastomer, or even with polymers other than elastomers, for example thermoplastic polymers.

### Ultra-accelerators

Rubber compositions which are intended for use as cushion gum, and those used as repair mixes, must present rapid curing at low temperatures with high yields. Therefore, in addition to vulcanization accelerators, ultra-accelerators are added to the composition. One classification of accelerators is as follows:

**Relative Vulcanization**

| **Type** | **Time at 284°F** | **Examples** |
|---|---|---|
| **Slow** | **90 - 120 minutes** | **Aniline** |
| **Moderately fast** | **Circa 60 min** | **Diphenylguanidine Hexamethylene tetramine** |
| **Fast** | **Circa 30 min** | **Mercaptobenzothiazole Benzothiazyl disulfide** |
| **Ultra-accelerators** | **Several minutes** | **Thiurams Dithiocarbamates Xanthates** |

H. L. Stephans in "The Compounding and Vulcanization of Rubber", Chapter 2, Rubber Technology 3^{rd} edition, edited by Maurice Morton, 1987, incorporated herein by reference.

Suitable vulcanization ultra-accelerators include thiurams, xanthates, dithiocarbamates, dithiophosphates, and mixtures thereof. More specifically, these include, but are not limited to:
dithiocarbamates - zinc dibenzyl dithiocarbamate (ZBEC - CAS No. 14726-36-4), zinc-N-dimethyl-dithiocarbamate (ZDMC), zinc-N-diethyldithiocarbamate (ZDEC - CAS No. 14323-55-1), zinc-N-dibutyl-dithiocarbamate (ZDBC - CAS No. 35884-05-0), zinc-N-ethylphenyl-dithiocarbamate (ZEBC - (CAS No. 14364-93-6), zinc-N-pentamethylene dithiocarbamate (ZPMC - CAS No. 13878-54-1), piperidinium pentamethylene dithiocarbamate (CAS No. 98-77-1), sodium diethyl dithiocarbamate (CAS No. 148-18-5);
   bismuth dimethyl dithiocarbamate (CAS No. 21260-46-8); cadmium diethyl dithiocarbamate (CAS No. 14239-68-0); copper dibutyl dithiocarbamate (CAS No. 13927-71-4); copper dimethyl dithiocarbamate (CAS No.137-29-1); cyclohexylethylammonium cyclohexyl ethyl dithiocarbamate; dimethylammonium dimethyl dithiocarbamate (CAS No.598-64-1); dimethylcyclohexylammonium dibutyl dithiocarbamate (CAS No. 149-82-6); lead diamyl dithiocarbamate (36501-84-5); lead dimethyl dithiocarbamate (CAS No. 19010-66-3); CAS No. 72146-43-1; CAS 72146-41-9; CAS No. 72146-42-0; nickel di-isobutyl dithiocarbamate (CAS No. 15317-78-9); nickel dibutyl dithiocarbamate (CAS No. 13927-77-0); nickel dimethyl dithiocarbamate (CAS No. 15521-65-0); N-oxydiethylenethiocarbamyl-N'oxydiethylenesulfenamide (CAS No. 13752-51-7); potassium di-methyl dithiocarbamate (CAS.No. 128-03-0); selenium diethyl dithiocarbamate (CAS No. 5456-28-0); selenium dimethyl dithiocarbamate (CAS No. 144-34-3); sodium cylclohexylethyl dithiocarbamate; sodium dibenzyl dithiocarbamate (CAS No. 55310-46-8); sodium dibutyl dithiocarbamate (CAS No. 136-30-1); sodium dimethyl dithiocarbamate (CAS No. 128-04-1); disodium ethylene-bis-dithiocarbamate; sodium diisobutyl dithiocarbamate (CAS No. 2219-18-3); tellurium diethyldithiocarbamate (CAS No. 20941-65-5); zinc diamyl dithiocarbamate (CAS No. 15337-18-5); zinc dibutyl dithiocarbamate (CAS No.136-23-2); zinc diisobutyl dithiocarbamate (CAS No. 36190-62-2); zinc dimethyl dithiocarbamate (CAS No. 137-30-4); N, N dimethyl cyclohexyl ammonium dithiocarbamate; 2,2'-dithiodo (ethylammonium) bis (dibenzyl dithiocarbamate)
thiurams - tetramethylthiuram monosulphide (TMTM), tetramethylthiuram disulphide, tetraethylthiuram disulfide (TETD), tetrabenzylthiuram disulfide (TBzTD) xanthates - zinc isopropyl xanthate (ZIX), sodium isopropyl xanthate (SIX), zinc butyl xanthate (ZBX), dibutyl xanthogen disulfide, diethyl xanthogenate, diisopropyl xanthogen disulfide, diisobutyl xanthogen disulfide,
dithiophosphates - copper diisopropyl dithiophosphate, zinc-O-,O-di-n-butylphosphorodithioate

Other suitable accelerators may be used in the rubber composition, such as: thiazoles, sulphenamides, guanidines, thiourea derivatives, amine derivatives, and combinations thereof. These include, but are not limited to: benzothiazyl-2-cyclohexyl sulphenamide (CBS), benzothiazoyl-2-tert.-butyl sulphenamide (TBBS), 2-mercaptobenzothiazole (MBT), zinc or sodium salt of 2-mercaptobenzothiazole (ZMBT), benzothiazyl-2-sulphene morpholide (MBS), benzothiazyldicyclohexy-1 sulphenamide (DCBS), diphenyl guanidine (DPG), Triphenyl guanidine (TPG), diorthotolyl guanidine (DOTG), o-tolylbigaunide (OTBG),, ethylene thiourea (ETU), diethylthiourea (DETU), diphenyl thiourea (DPTU), benzothiazole disulfide (MBTS), hexamethylene tetramine (HMT), ethylidene aniline (EA), and mixtures thereof.

A combination of primary, secondary, and tertiary accelerators may be used to obtain the desired cure rate.

### Sulfur

Suitable sulfur includes pulverized sulphur, rubber maker's sulphur, commercial sulphur, and insoluble sulfur.

### Fillers

Useful fillers include carbon black, and so-called white, or inorganic fillers. The white or inorganic filler used as reinforcing filler may constitute all or only part of the total reinforcing filler, in this latter case associated, for example, with carbon black.

In the present application, "reinforcing inorganic filler", in known manner, is understood to mean an inorganic or mineral filler, whatever its colour and its origin (natural or synthetic), also referred to as "white" filler or sometimes "clear" filler in contrast to carbon black, this inorganic filler being capable, on its own, without any other means than an intermediate coupling agent, of reinforcing a rubber composition intended for the manufacture of tires, in other words which is capable of replacing a conventional tyre-grade carbon black filler in its reinforcement function.

The reinforcing inorganic filler may be a mineral filler of the siliceous or aluminous type, or a mixture of these two types of fillers.

The physical state in which the reinforcing inorganic filler is present is immaterial, whether it be in the form of a powder, microbeads, granules or alternatively balls. Of course, "reinforcing inorganic filler" is also understood to mean mixtures of different reinforcing inorganic fillers, in particular of highly dispersible siliceous and/or aluminous fillers such as described above.

The reinforcing inorganic filler may also be used in a blend (mixture) with carbon black. Suitable carbon blacks are any carbon blacks, including the blacks of the type HAF, ISAF and SAF, which are conventionally used in tires, and particularly in treads for these tires. As non-limitative examples of such blacks, mention may be made of the blacks N115, N134, N234, N339, N347, N375, and the 600 series, including, but not limited to, N630, N650 and N660. The amount of carbon black present in the total reinforcing filler may vary within wide limits, this amount in one embodiment being less than the amount of reinforcing inorganic filler present in the rubber composition.

### Preparation of the rubber compositions

The compositions are produced in suitable mixers, in a manner known to the person skilled in the art, typically using two successive preparation phases, a first phase of thermomechanical working at high temperature, followed by a second phase of mechanical working at lower temperature, as described, for example, in the applications EP-A-0 501 227, EP-A-0 810 258 or WO99/28376.

The first phase of thermomechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120°C and 190°C, more narrowly between 130°C and 180°C, is reached.

This first phase may itself comprise a single or several thermomechanical working stages, separated for example by one or more intermediate cooling stages. The various ingredients of the composition, elastomer(s), reinforcing filler and its coupling agent, and the various other components ("additives") may be incorporated in the mixer in one or more steps, either during the first thermomechanical stage, or staggered during the various thermomechanical stages, if applicable. The total duration of this thermomechanical working (typically between 1 and 20 minutes, for example between 2 and 10 minutes) is selected according to the specific operating conditions, in particular the maximum temperature selected, the nature and volume of the constituents, the important thing being that a good dispersion of the various ingredients which inter-react is obtained in the elastomeric matrix, thus permitting firstly good processing of the composition in the uncured state, then a sufficient level of reinforcement, after curing, by the reinforcing filler and its intermediate coupling agent.

After cooling of the mixture thus obtained, a second phase of mechanical working is then implemented, at a lower temperature. Sometimes referred to as "productive" phase, this finishing phase consists of incorporating by mixing the vulcanization (or cross-linking) system (sulphur and accelerator(s)), in a suitable device, for example an open mill. It is performed for an appropriate time (typically between 1 and 30 minutes, for example between 2 and 5 minutes) and at a sufficiently low temperature (typically less than 120°C, for example between 60°C and 100°C), in all cases lower than the vulcanization temperature of the mixture, so as to protect against premature vulcanization (scorching). The second stage of mixing may be done on either a mill or a Banbury mixer. The rubber compound according to the invention can be incorporated in the rubber composition in either the first or the second stage of mixing.

After the mixing steps, described briefly above, the final composition thus obtained can then calendered, for example in the form of a film or a sheet, in particular for characterization in the laboratory, or alternatively extruded, in order to form for example a rubber profiled element or a repair material.

It goes without saying that the invention relates to the rubber compositions previously described, both in the "uncured" state (i.e., before curing) and in the "cured" or vulcanized state (i.e., after cross-linking or vulcanization).

Of course, the compositions according to the invention may be used alone or in a blend with other rubber compositions which can be used for manufacturing tires.

### Rubber Composition

According to the invention, a typical rubber composition is made as follows:
100 phr dienic elastomer or mixture of dienic elastomers
0-60 phr filler
0-35 phr aromatic oils (including naphthenic and paraffinic oils)
0-4 phr antidegradant/ antiozonant
0.5 to 3 parts stearic acid
0-3 phr primary, secondary or tertiary accelerator, or a mixture
0.2-3 phr ultra accelerator
0-4 phr sulfur
0-5 phr zinc oxide
0-5 phr tackifying resin
5-10 phr of the phenylene diamine compound according to the invention

### Explanation of Figures

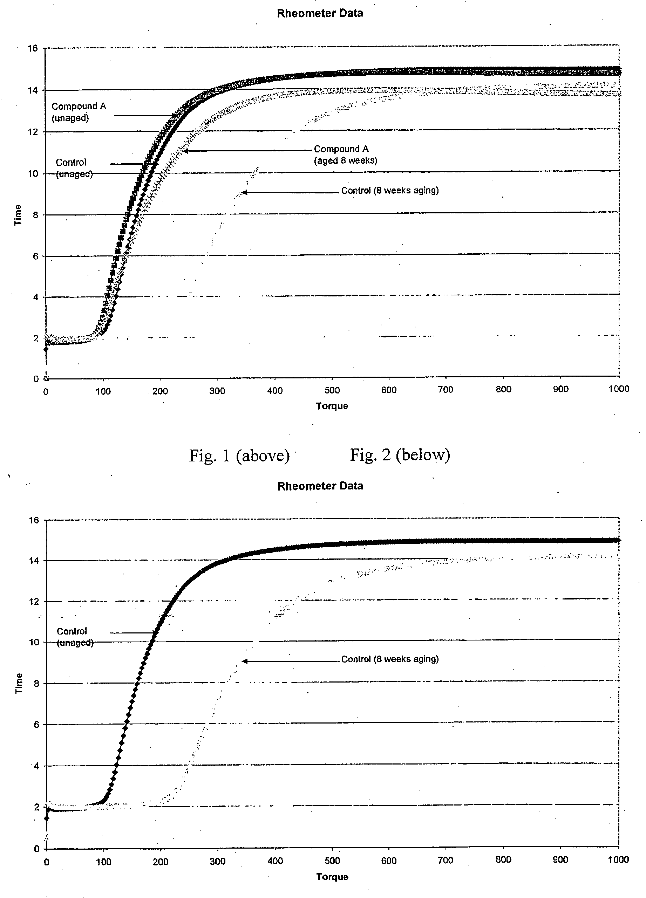

Figure 1 illustrates the rheometer curing curve for the unaged control mix and for the aged control mix. Testing was conducted using an MDR type rheometer. The abscissa is time, and the ordinate is torque.
Figure 2 illustrates the rheometer curing curve for the control mix and a mix according to the invention containing compound A. Curves for the unaged and aged compounds are also shown.

The invention will be further understood by reference to the following nonlimiting examples.

### Examples

Below are several examples which show the effect on scorch after an accelerated aging test at 40°C. The examples represent different compositions which are the subject of this invention.

A control rubber mix was prepared as follows:
(a) 100 parts by weight per hundred parts (phr) rubber;
(b) 40 - 60 phr carbon black;
(c) 0 - 30 phr oil;
(d) 2 - 5 parts zinc oxide;
(e) 1 - 3 part stearic acid;
(f) 1 - 3 parts anti-oxidant
(g) 1 - 3 phr sulfur
(h) 1 - 5 phr blend of accelerators and ultra-accelerators

The time to cure of a cushion gum mix including an ultra-accelerator decreases with time. Due to this decrease in curing efficiency, the curing time must be increased to compensate. This change in curing efficiency can be seen in the increase in scorch and t90 (obtained from a rheometer test - time required to reach 90% of the maximum torque).

The composition according to the present invention has a reduced scorch and t90 as compared to a standard cushion gum formulation not according to the invention. This stabilization of the cure system is shown in the supporting data below. Compound A is N, N' Bis(1,4-dimethylpentyl)-p-phenylenediamine).

### Graph #2 - The impact of higher loadings of compound A on aging

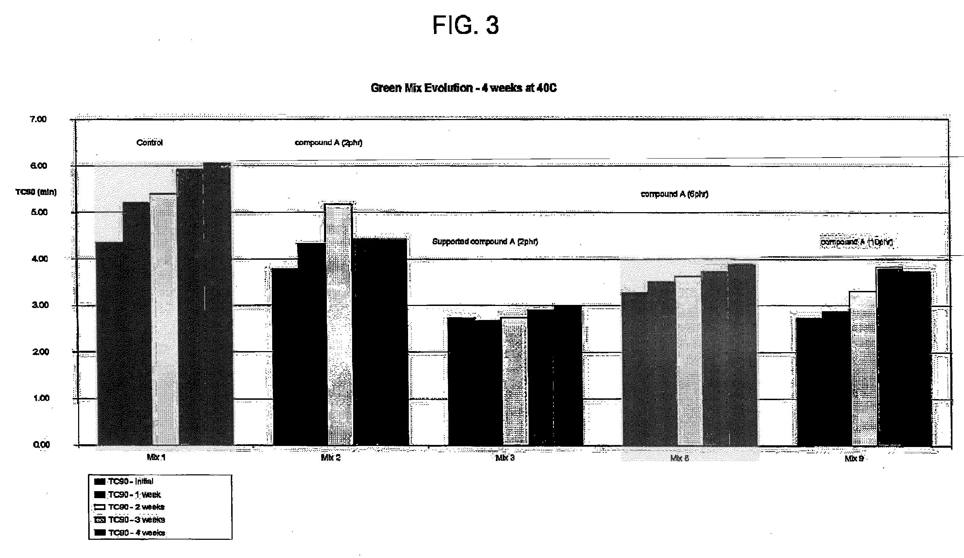

This graph (figure 3) illustrates the effect of compound A loading on stability.

## Claims

1. A rubber composition comprising 100 parts by weight of at least a dienic rubber and:
- 0-60 phr (parts per hundred of the rubber by weight) filler,
- 0-3 5 phr aromatic oils (including naphthenic and paraffinic oils)
- 0-4 phr antidegradant/ antiozonant
- 0.5 to 3 parts stearic acid
- 0-3 phr primary, secondary or tertiary accelerator, or a mixture
- 0.2-3 phr ultra accelerator
- 0-4 phr sulfur
- 0-5 phr zinc oxide
- 0-5 phr tackifying resin
comprising 5-10 phr of the following compound:
R1-NH-phenyl-NH-R2
wherein the amino moieties occupy the 1 and 4 positions of the phenyl ring, and R1 and R2 are selected from the group consisting of:
H, C1 to C3 straight chain or branched alkyl groups,
and wherein R1 and R2 may be the same or different;
wherein the t₉₀, isothermal at 125°C is within thirty percent of the t₉₀, after 28 days aging at forty degrees Celsius (40°C), as the unaged green rubber composition, t₉₀ being measured according ASTM D2084 or ISO 3417.

2. The rubber composition of claim 1, wherein the t₉₀, isothermal at 125°C is within twenty percent of the t₉₀, after 28 days aging at forty degrees Celsius (40°C), as the unaged green rubber composition.

3. A tire comprising the rubber composition of claim 1, wherein the tire comprises a carcass connected to a tread, wherein the rubber composition is a connecting rubber connecting the carcass and the tread.

4. A rubber composition comprising 100 parts by weight of at least a dienic rubber and:
- 0-60 phr (parts per hundred of the rubber by weight) filler,
- 0-35 phr aromatic oils (including naphthenic and paraffinic oils)
- 0-4 phr antidegradant/ antiozonant
- 0.5 to 3 parts stearic acid
- 0-3 phr primary, secondary or tertiary accelerator, or a mixture
- 0.2-3 phr ultra accelerator
- 0-4 phr sulfur
- 0-5 phr zinc oxide
- 0-5 phr tackifying resin
comprising 5-10 phr of the following compound:
R1-NH-phenyl-NH-R2
wherein the amino moieties occupy the 1 and 4 positions of the phenyl ring, and R1 and R2 are selected from the group consisting of:
H, C4 to C5 straight chain or branched alkyl groups,
wherein if R1 and R2 are branched alkyl groups, said branches are selected from the group consisting of methyl and ethyl groups,
and wherein R1 and R2 may be the same or different;
wherein the t₉₀, isothermal at 125°C is within thirty percent of the t₉₀, after 28 days aging at forty degrees Celsius (40°C), as the unaged green rubber composition, t₉₀ being measured according ASTM D2084 or ISO 3417.

5. The rubber composition of claim 4, wherein the t₉₀, isothermal at 125°C is within twenty percent of the t₉₀, after 28 days aging at forty degrees Celsius (40°C), as the unaged green rubber composition.

6. A tire comprising the rubber composition claim 4, wherein the tire comprises a carcass connected to a tread, wherein the rubber composition is a connecting rubber connecting the carcass and the tread.

7. A rubber composition comprising 100 parts by weight of at least a dienic rubber and:
- 0-60 phr (parts per hundred of the rubber by weight) filler,
- 0-35 phr aromatic oils (including naphthenic and paraffinic oils)
- 0-4 phr antidegradant/ antiozonant
- 0.5 to 3 parts stearic acid
- 0-3 phr primary, secondary or tertiary accelerator, or a mixture
- 0.2-3 phr ultra accelerator
- 0-4 phr sulfur
- 0-5 phr zinc oxide
- 0-5 phr tackifying resin
comprising 5-10 phr of the following compound:
R1-NH-phenyl-NH-R2
wherein the amino moieties occupy the 1 and 4 positions of the phenyl ring, and R1 and R2 are selected from the group consisting of:
H, C6 to C 15 straight chain or branched alkyl groups,
wherein if R1 and R2 are branched alkyl groups, said branches are selected from the group consisting of methyl and ethyl groups,
and wherein R1 and R2 may be the same or different;
wherein the t₉₀, isothermal at 125°C is within thirty percent of the t₉₀, after 28 days aging at forty degrees Celsius (40°C), as the unaged green rubber composition, t₉₀ being measured according ASTM D2084 or ISO 3417.

8. The rubber composition of claim 7, wherein the t₉₀, isothermal at 125°C is within twenty percent of the t₉₀, after 28 days aging at forty degrees Celsius (40°C), as the unaged green rubber composition.

9. The rubber composition of claim 7, wherein the compound is selected from the group consisting of: N, N'-bis(1,4-dimethylpentyl)-p-phenylene diamine and N,N'-di-sec-butyl-p-phenylenediamine, and mixtures thereof.

10. A tire comprising the rubber composition of claim 7, wherein the tire comprises a carcass connected to a tread, wherein the rubber composition of claim 1 is a connecting rubber connecting the carcass and the tread.

11. The rubber composition according to any of claims 1, 4 or 7, wherein the scorch, measured at 105°C is within eight percent of the scorch, after 28 days aging at forty degrees Celsius (40°C), as the unaged green rubber composition.

12. The rubber composition according to any one of claims 1, 4 and 7, wherein the scorch, measured at 105°C is within five percent of the scorch, after 28 days aging at forty degrees Celsius (40°C), as the unaged green rubber composition.

13. The rubber composition according to any one of claims 1,4 and 7, wherein the scorch, measured at 105°C is within three percent of the scorch, after 28 days aging at forty degrees Celsius (40°C), as the unaged green rubber composition.

14. The rubber composition according to any one of claims 1, 4 and 7, wherein the rubber composition further comprises a dithiocarbamate accelerator.

15. The rubber composition according to any one of claims 1, 4 and 7, wherein the dienic rubber is selected from the group consisting of natural and synthetic rubbers, and mixtures thereof.

16. The rubber composition of claim 15, wherein the dienic rubber is selected from the group consisting of: polybutadienes (BR), polyisoprenes (IR), natural rubber (NR), butadiene copolymers, isoprene copolymers and mixtures of these elastomers, and mixtures thereof, butadiene-styrene copolymers (SBR), butadiene-isoprene copolymers (BIR), isoprene-styrene copolymers (SIR) and isoprene-butadiene-styrene copolymers (SBIR), and mixtures thereof.

17. A method of retreading a tire comprising the step of application of the rubber composition of any one of claims 1, 4 and 7 to a tire carcass or a tire tread to secure the tread to the carcass.

18. A method of retreading a tire including a tread and a carcass comprising the steps of:
(a) removing the tread;
(b) applying the rubber composition of any one of claims 1,4 and 7 as a cushion gum to the carcass.

19. A method of repairing a tire including a defect comprising the application of the rubber composition of any one of claims 1, 4 and 7 to a defect in the tire.

## Patentansprüche

1. Kautschukzusammensetzung umfassend 100 Gewichtsteile mindestens eines dienischen Kautschuks und:
- 0-60 phr (parts per hundred rubber) Füllstoff,
- 0-35 phr aromatische Öle (einschließlich naphthenische und paraffinische Öle)
- 0-4 phr Alterungsschutzmittel / Ozonschutzmittel
- 0,5 bis 3 Teile Stearinsäure
- 0-3 phr primären, sekundären oder tertiären Beschleuniger, oder eine Mischung
- 0,2-3 phr Ultrabeschleuniger
- 0-4 phr Schwefel
- 0-5 phr Zinkoxid
- 0-5 phr klebrig machendes Harz
umfassend 5-10 phr der folgenden Verbindung:
R1-NH-phenyl-NH-R2
worin die Aminoeinheiten die Stellungen 1 und 4 des Phenylrings einnehmen und R1 und R2 ausgewählt sind aus der Gruppe bestehend aus:
H, geradkettigen oder verzweigten C₁-C₃-Alkylgruppen,
und worin R1 und R2 gleich oder verschieden sein können;
wobei die t₉₀-Isotherme bei 125°C innerhalb von 30% der t₉₀-Isotherme nach einer Alterung von 28 Tagen bei vierzig Grad Celsius (40°C) liegt, als ungealterte grüne Kautschukzusammensetzung, wobei t₉₀ gemäß ASTM D2084 oder ISO 3417 gemessen wird.

2. Kautschukzusammensetzung nach Anspruch 1, wobei die t₉₀-Isotherme bei 125°C innerhalb von 20% der t₉₀-Isotherme nach einer Alterung von 28 Tagen bei vierzig Grad Celsius (40°C) liegt, als ungealterte grüne Kautschukzusammensetzung.

3. Reifen mit der Kautschukzusammensetzung nach Anspruch 1, wobei der Reifen eine mit einer Lauffläche verbundene Karkasse umfasst, wobei die Kautschukzusammensetzung ein verbindender Kautschuk ist, der die Karkasse und die Lauffläche miteinander verbindet.

4. Kautschukzusammensetzung umfassend 100 Gewichtsteile mindestens eines dienischen Kautschuks und:
- 0-60 phr (parts per hundred rubber) Füllstoff,
- 0-35 phr aromatische Öle (einschließlich naphthenische und paraffinische Öle)
- 0-4 phr Alterungsschutzmittel / Ozonschutzmittel
- 0,5 bis 3 Teile Stearinsäure
- 0-3 phr primären, sekundären oder tertiären Beschleuniger, oder eine Mischung
- 0,2-3 phr Ultrabeschleuniger
- 0-4 phr Schwefel
- 0-5 phr Zinkoxid
- 0-5 phr klebrig machendes Harz
umfassend 5-10 phr der folgenden Verbindung:
R1-NH-phenyl-NH-R2
worin die Aminoeinheiten die Stellungen 1 und 4 des Phenylrings einnehmen und R1 und R2 ausgewählt sind aus der Gruppe bestehend aus:
H, geradkettigen oder verzweigten C₄-C₅-Alkylgruppen,
wobei, wenn R1 und R2 verzweigte Alkylgruppen sind, die Zweige ausgewählt sind aus der aus Methyl- und Ethylgruppen bestehenden Gruppe,
und wobei R1 und R2 gleich oder verschieden sein können;
wobei die t₉₀-Isotherme bei 125°C innerhalb von 30% der t₉₀-Isotherme nach einer Alterung von 28 Tagen bei vierzig Grad Celsius (40°C) liegt, als ungealterte grüne Kautschukzusammensetzung, wobei t₉₀ gemäß ASTM D2084 oder ISO 3417 gemessen wird.

5. Kautschukzusammensetzung nach Anspruch 4, wobei die t₉₀-Isotherme bei 125°C innerhalb von 20% der t₉₀-Isotherme nach einer Alterung von 28 Tagen bei vierzig Grad Celsius (40°C) liegt, als ungealterte grüne Kautschukzusammensetzung.

6. Reifen mit der Kautschukzusammensetzung nach Anspruch 4, wobei der Reifen eine mit einer Lauffläche verbundene Karkasse umfasst, wobei die Kautschukzusammensetzung ein verbindender Kautschuk ist, der die Karkasse und die Lauffläche miteinander verbindet.

7. Kautschukzusammensetzung umfassend 100 Gewichtsteile mindestens eines dienischen Kautschuks und:
- 0-60 phr (parts per hundred rubber) Füllstoff,
- 0-35 phr aromatische Öle (einschließlich naphthenische und paraffinische Öle)
- 0-4 phr Alterungsschutzmittel / Ozonschutzmittel
- 0,5 bis 3 Teile Stearinsäure
- 0-3 phr primären, sekundären oder tertiären Beschleuniger, oder eine Mischung
- 0,2-3 phr Ultrabeschleuniger
- 0-4 phr Schwefel
- 0-5 phr Zinkoxid
- 0-5 phr klebrig machendes Harz
umfassend 5-10 phr der folgenden Verbindung:
R1-NH-phenyl-NH-R2
worin die Aminoeinheiten die Stellungen 1 und 4 des Phenylrings einnehmen und R1 und R2 ausgewählt sind aus der Gruppe bestehend aus:
H, geradkettigen oder verzweigten C₆-C₁₅-Alkylgruppen,
wobei, wenn R1 und R2 verzweigte Alkylgruppen sind, die Zweige ausgewählt sind aus der aus Methyl- und Ethylgruppen bestehenden Gruppe,
und wobei R1 und R2 gleich oder verschieden sein können;
wobei die t₉₀-Isotherme bei 125°C innerhalb von 30% der t₉₀-Isotherme nach einer Alterung von 28 Tagen bei vierzig Grad Celsius (40°C) liegt, als ungealterte grüne Kautschukzusammensetzung, wobei t₉₀ gemäß ASTM D2084 oder ISO 3417 gemessen wird.

8. Kautschukzusammensetzung nach Anspruch 7, wobei die t₉₀-Isotherme bei 125°C innerhalb von 20% der t₉₀-Isotherme nach einer Alterung von 28 Tagen bei vierzig Grad Celsius (40°C) liegt, als ungealterte grüne Kautschukzusammensetzung.

9. Kautschukzusammensetzung nach Anspruch 7, wobei die Verbindung ausgewählt ist aus der Gruppe bestehend aus: N,N'-bis(1,4-Dimethylpentyl)-p-phenylendiamin und N,N'-di-sec-Butyl-p-phenylendiamin und Mischungen davon.

10. Reifen mit der Kautschukzusammensetzung nach Anspruch 7, wobei der Reifen eine mit einer Lauffläche verbundene Karkasse umfasst, wobei die Kautschukzusammensetzung nach Anspruch 1 ein verbindender Kautschuk ist, der die Karkasse und die Lauffläche miteinander verbindet.

11. Kautschukzusammensetzung nach einem der Ansprüche 1, 4 oder 7, wobei der Scorch, gemessen bei 105°C, innerhalb von acht Prozent des Scorch nach einer Alterung von 28 Tagen bei vierzig Grad Celsius (40°C) liegt, als ungealterte grüne Kautschukzusammensetzung.

12. Kautschukzusammensetzung nach einem der Ansprüche 1, 4 und 7, wobei der Scorch, gemessen bei 105°C, innerhalb von fünf Prozent des Scorch nach einer Alterung von 28 Tagen bei vierzig Grad Celsius (40°C) liegt, als ungealterte grüne Kautschukzusammensetzung.

13. Kautschukzusammensetzung nach einem der Ansprüche 1, 4 und 7, wobei der Scorch, gemessen bei 105°C, innerhalb von drei Prozent des Scorch nach einer Alterung von 28 Tagen bei vierzig Grad Celsius (40°C) liegt, als ungealterte grüne Kautschukzusammensetzung.

14. Kautschukzusammensetzung nach einem der Ansprüche 1, 4 und 7, wobei die Kautschukzusammensetzung ferner einen Dithiocarbamat-Beschleuniger umfasst.

15. Kautschukzusammensetzung nach einem der Ansprüche 1, 4 und 7, wobei der dienische Kautschuk ausgewählt ist aus der aus Natur- und Synthesekautschuk bestehenden Gruppe und aus Mischungen davon.

16. Kautschukzusammensetzung nach Anspruch 15, wobei der dienische Kautschuk ausgewählt ist aus der Gruppe bestehend aus: Polybutadienen (BR), Polyisoprenen (IR), Naturkautschuk (NR), Butadiencopolymeren, Isoprencopolymeren und Mischungen dieser Elastomere, sowie Mischungen davon, Butadien-Styrol-Copolymeren (SBR), Butadien-Isopren-Copolymeren (BIR), Isopren-Styrol-Copolymeren (SIR) und Isopren-Butadien-Styrol-Copolymeren (SBIR) sowie Mischungen davon.

17. Verfahren zum Runderneuern eines Reifens, umfassend den Schritt des Aufbringens der Kautschukzusammensetzung nach einem der Ansprüche 1, 4 und 7 auf eine Reifenkarkasse oder eine Reifenlauffläche, um die Lauffläche an der Karkasse zu befestigen.

18. Verfahren zum Runderneuern eines Reifens mit einer Lauffläche und einer Karkasse, umfassend die folgenden Schritte:
a) Entfernen der Lauffläche;
b) Aufbringen der Kautschukzusammensetzung nach einem der Ansprüche 1, 4 und 7 als Dämpfungsgummi auf die Karkasse.

19. Verfahren zum Reparieren eines Reifens mit einem Schaden, bei dem die Kautschukzusammensetzung nach einem der Ansprüche 1, 4 und 7 auf einen Schaden in dem Reifen aufgebracht wird.

## Revendications

1. Composition de caoutchouc, comprenant 100 parties en poids d'au moins un caoutchouc de diène, ainsi que :
- 0 à 60 pcc (parties pour cent parties de caoutchouc en poids) d'une charge,
- 0 à 35 pcc d'huiles aromatiques (y compris huiles naphténiques et huiles paraffiniques),
- 0 à 4 pcc d'agent anti-dégradation/anti-ozone,
- 0,5 à 3 parties d'acide stéarique,
- 0 à 3 pcc d'accélérateur primaire, secondaire ou tertiaire ou d'un mélange,
- 0,2 à 3 pcc d'ultra-accélérateur,
- 0 à 4 pcc de soufre,
- 0 à 5 pcc d'oxyde de zinc,
- 0 à 5 pcc de résine poissante,
et comprenant 5 à 10 pcc d'un composé de formule suivante :
R1-NH-phényle-NH-R2
dans laquelle les groupes amino occupent les positions 1 et 4 du cycle phényle, et R1 et R2 représentent des entités qui sont choisies dans l'ensemble formé par un atome d'hydrogène et les groupes alkyle en C₁ à C₃, à chaîne linéaire ou ramifiée, ces entités R1 et R2 pouvant être identiques ou différentes ;
étant entendu que pour la composition de caoutchouc crue non vieillie, le temps t₉₀, en test isotherme à 125 °C, diffère de moins de 30 % du temps t₉₀ observé après 28 jours de vieillissement à 40 °C, les temps t₉₀ étant mesurés selon la norme ASTM D2084 ou ISO 3417.

2. Composition de caoutchouc conforme à la revendication 1, pour laquelle, pour la composition de caoutchouc crue non vieillie, le temps t₉₀, en test isotherme à 125 °C, diffère de moins de 20 % du temps t₉₀ observé après 28 jours de vieillissement à 40 °C.

3. Pneu comprenant une composition de caoutchouc conforme à la revendication 1, lequel pneu comprend une carcasse raccordée à une bande de roulement, et dans lequel la composition de caoutchouc constitue un raccord de caoutchouc raccordant la carcasse et la bande de roulement.

4. Composition de caoutchouc, comprenant 100 parties en poids d'au moins un caoutchouc de diène, ainsi que :
- 0 à 60 pcc (parties pour cent parties de caoutchouc en poids) d'une charge,
- 0 à 35 pcc d'huiles aromatiques (y compris huiles naphténiques et huiles paraffiniques),
- 0 à 4 pcc d'agent anti-dégradation/anti-ozone,
- 0,5 à 3 parties d'acide stéarique,
- 0 à 3 pcc d'accélérateur primaire, secondaire ou tertiaire ou d'un mélange,
- 0,2 à 3 pcc d'ultra-accélérateur,
- 0 à 4 pcc de soufre,
- 0 à 5 pcc d'oxyde de zinc,
- 0 à 5 pcc de résine poissante,
et comprenant 5 à 10 pcc d'un composé de formule suivante :
R1-NH-phényle-NH-R2
dans laquelle les groupes amino occupent les positions 1 et 4 du cycle phényle, et R1 et R2 représentent des entités qui sont choisies dans l'ensemble formé par un atome d'hydrogène et les groupes alkyle en C₄ à C₅, à chaîne linéaire ou ramifiée, étant entendu que, si R1 et R2 représentent des groupes alkyle ramifiés, les ramifications sont choisies dans l'ensemble formé par les groupes éthyle et méthyle, et que ces entités R1 et R2 peuvent être identiques ou différentes ;
étant entendu que pour la composition de caoutchouc crue non vieillie, le temps t₉₀, en test isotherme à 125 °C, diffère de moins de 30 % du temps t₉₀ observé après 28 jours de vieillissement à 40 °C, les temps t₉₀ étant mesurés selon la norme ASTM D2084 ou ISO 3417.

5. Composition de caoutchouc conforme à la revendication 4, pour laquelle, pour la composition de caoutchouc crue non vieillie, le temps t₉₀, en test isotherme à 125 °C, diffère de moins de 20 % du temps t₉₀ observé après 28 jours de vieillissement à 40 °C.

6. Pneu comprenant une composition de caoutchouc conforme à la revendication 4, lequel pneu comprend une carcasse raccordée à une bande de roulement, et dans lequel la composition de caoutchouc constitue un raccord de caoutchouc raccordant la carcasse et la bande de roulement.

7. Composition de caoutchouc, comprenant 100 parties en poids d'au moins un caoutchouc de diène, ainsi que :
- 0 à 60 pcc (parties pour cent parties de caoutchouc en poids) d'une charge,
- 0 à 35 pcc d'huiles aromatiques (y compris huiles naphténiques et huiles paraffiniques),
- 0 à 4 pcc d'agent anti-dégradation/anti-ozone,
- 0,5 à 3 parties d'acide stéarique,
- 0 à 3 pcc d'accélérateur primaire, secondaire ou tertiaire ou d'un mélange,
- 0,2 à 3 pcc d'ultra-accélérateur,
- 0 à 4 pcc de soufre,
- 0 à 5 pcc d'oxyde de zinc,
- 0 à 5 pcc de résine poissante,
et comprenant 5 à 10 pcc d'un composé de formule suivante :
R1-NH-phényle-NH-R2
dans laquelle les groupes amino occupent les positions 1 et 4 du cycle phényle, et R1 et R2 représentent des entités qui sont choisies dans l'ensemble formé par un atome d'hydrogène et les groupes alkyle en C₆ à C₁₅, à chaîne linéaire ou ramifiée, étant entendu que, si R1 et R2 représentent des groupes alkyle ramifiés, les ramifications sont choisies dans l'ensemble formé par les groupes éthyle et méthyle, et que ces entités R1 et R2 peuvent être identiques ou différentes ;
étant entendu que pour la composition de caoutchouc crue non vieillie, le temps t₉₀, en test isotherme à 125 °C, diffère de moins de 30 % du temps t₉₀ observé après 28 jours de vieillissement à 40 °C, les temps t₉₀ étant mesurés selon la norme ASTM D2084 ou ISO 3417.

8. Composition de caoutchouc conforme à la revendication 7, pour laquelle, pour la composition de caoutchouc crue non vieillie, le temps t₉₀, en test isotherme à 125 °C, diffère de moins de 20 % du temps t₉₀ observé après 28 jours de vieillissement à 40 °C.

9. Composition de caoutchouc conforme à la revendication 7, dans laquelle le composé est choisi dans l'ensemble formé par la N,N'-bis(1,4-diméthyl-pentyl)-p-phénylène-diamine et la N,N'-di-sec-butyl-p-phénylène-diamine, ainsi que leurs mélanges.

10. Pneu comprenant une composition de caoutchouc conforme à la revendication 7, lequel pneu comprend une carcasse raccordée à une bande de roulement, et dans lequel la composition de caoutchouc constitue un raccord de caoutchouc raccordant la carcasse et la bande de roulement.

11. Composition de caoutchouc conforme à l'une des revendications 1, 4 et 7, pour laquelle, pour la composition de caoutchouc crue non vieillie, le temps de grillage, mesuré à 105 °C, diffère de moins de 8 % du temps de grillage observé après 28 jours de vieillissement à 40 °C.

12. Composition de caoutchouc conforme à l'une des revendications 1, 4 et 7, pour laquelle, pour la composition de caoutchouc crue non vieillie, le temps de grillage, mesuré à 105 °C, diffère de moins de 5 % du temps de grillage observé après 28 jours de vieillissement à 40 °C.

13. Composition de caoutchouc conforme à l'une des revendications 1, 4 et 7, pour laquelle, pour la composition de caoutchouc crue non vieillie, le temps de grillage, mesuré à 105 °C, diffère de moins de 3 % du temps de grillage observé après 28 jours de vieillissement à 40 °C.

14. Composition de caoutchouc conforme à l'une des revendications 1, 4 et 7, laquelle composition de caoutchouc contient en outre un accélérateur de type dithiocarbamate.

15. Composition de caoutchouc conforme à l'une des revendications 1, 4 et 7, dans laquelle le caoutchouc de diène est choisi dans l'ensemble constitué par les caoutchoucs naturels et les caoutchoucs synthétiques, et leurs mélanges.

16. Composition de caoutchouc conforme à la revendication 15, dans laquelle le caoutchouc de diène est choisi dans l'ensemble formé par les suivants : polybutadiènes (BR), polyisoprènes (IR), caoutchouc naturel (NR), copolymères de butadiène, copolymères d'isoprène et mélanges de ces élastomères, et leurs mélanges, copolymères de butadiène et de styrène (SBR), copolymères de butadiène et d'isoprène (BIR), copolymères d'isoprène et de styrène (SIR), copolymères d'isoprène, de butadiène et de styrène (SIBR), et leurs mélanges.

17. Procédé de rechapage de pneus, comprenant une étape qui consiste à appliquer une composition de caoutchouc, conforme à l'une des revendications 1, 4 et 7, sur une carcasse de pneu ou une bande de roulement de pneu, afin de fixer la bande de roulement à la carcasse.

18. Procédé de rechapage d'un pneu comprenant une bande de roulement et une carcasse, comportant les étapes suivantes :
a) retirer la bande de roulement,
b) et appliquer sur la carcasse, en guise de gomme de liaison, une composition de caoutchouc conforme à l'une des revendications 1, 4 et 7.

19. Procédé de réparation d'un pneu présentant un défaut, comportant le fait d'appliquer, sur un défaut du pneu, une composition de caoutchouc, conforme à l'une des revendications 1, 4 et 7.
